# EUROPEAN PATENT APPLICATION

(11) **EP 2 868 527 A1**
(43) Date of publication of application: **06.05.2015**
(21) Application number: 14191375.6
(22) Date of filing: 31.10.2014
(51) Int. Cl.: B60R 13/10, B60Q 1/56

(54) **Signaling system and vehicle comprising said signaling system**

(30) Priority: 05.11.2013 IT VR20130239
(71) Applicant: Marangoni, Angiolino, 37060 Castel D'Azzano (VR) (IT)
(72) Inventor: Marangoni, Angiolino, 37060 Castel D'Azzano (VR) (IT)
(74) Representative: Fisauli, Beatrice A. M.

(57) **Abstract**

The present invention refers to a signaling system suitable for being mounted on a vehicle comprising a braking system (24), a front part and a rear part, comprising a license plate holder acting as a support for the license plate of a vehicle. Said license plate holder comprises a communication device for the communication between the vehicle on which the license plate holder is mounted and the other vehicles and / or pedestrians.

More particularly, the communication device is suitable for signaling the behavior and intentions of the driver outside of the vehicle.

Besides, the present invention refers to a vehicle comprising a signaling system according to the invention.

## Description

The present invention refers, in general, to a signaling system comprising signaling means for the communication between a vehicle and a pedestrian, or between a vehicle and another vehicle, and so on. More particularly, the present invention refers to a signaling system comprising one or more license plate holders signaling the behavior and the intentions of the driver outside the vehicle.

Besides, the present invention refers also to a vehicle on which the signaling system in question is mounted.

As is known, the road vehicles are equipped with signaling devices to signal the intentions of the driver outside of the vehicle so as to make the driving of the other vehicles and the walking of the pedestrians near the vehicle in question less dangerous and easier.

These devices include, for instance, the direction indicators indicating the intention of the driver to turn to the right or to the left through turning on a side light flashing orange.

Another similar device is the stop light that signals in the rear a braking when pressing the brake pedal.

In an attempt to signal the braking also to those who should be in front of the vehicle, other light signals have been provided in the front of the vehicle. In this case, simultaneously to the turning on of the rear stop lights, even some colored lights are turned on in the inside of the front headlights in an attempt to signal the braking even to those who should be in front of the vehicle.

These colored lights are arranged in the front part of the vehicle but do not provide a clear and unambiguous message to the individual who is in front of the vehicle. Furthermore, these colored lights are difficult to mount in the inside of the headlights of the vehicle.

Other systems utilize light signals contained in the inside of a license plate holder realized to obtain the turning on of said light signals when activating the stop lights of the vehicle on which the license plate holder is mounted, in the rear of the vehicle as it appears from the example described in the patent document US 6.027.235.

The patent document US 2009/0033481 A1 discloses a signaling device showing humorous light messages, which device may be mounted on a vehicle. The device comprises humorous messages or messages reporting a typical message of the adhesives; the message is signaled when activating the rear stop, lights but just for entertainment.

The device comprises a panel on which a message is obtained in relief. This message in relief is illuminated by special lights integrated into the license plate holder.

Such devices are positioned in the rear of the vehicle and communicate messages which are substantially humorous so that there is a risk that these messages distract the attention of individuals around the vehicle.

An aim of the invention is to make the vision of the braking signal easy to individuals who are in front of and behind a vehicle.

Another aim of the invention is to make clear the message communicated to whom is in front of and behind the vehicle.

Another aim is to supply a support on which a signaling device is disposed, said support being easily mountable on a vehicle.

Another aim is to provide a message which will help to improve the communication and safety on the road.

These aims and others are achieved through a signaling system suitable for being mounted on a vehicle comprising a braking system, a front part and a rear part. The signaling system comprises a license plate holder that acts as a support for the license plate T of the vehicle and signalizes the intentions of the vehicle driver to an individual who is in the vicinity of the vehicle.

The signaling system according to the invention comprises signaling means and control means connected to the braking system of the vehicle. The control means are adapted to activate the signaling means when the braking system of the vehicle is actuated so that said signaling means communicate a message to the individual.

In the present description, the word "individual" refers to a pedestrian or a driver of another vehicle.

Through the signaling system according to the invention, even when the individual (a pedestrian or a driver of another vehicle) is in front of the vehicle in question, the individual realizes clearly and unequivocally the intention of the vehicle driver to stop and let pass the pedestrian or the other vehicle.

Moreover, a license plate holder as in the signaling system according to the invention may be easily fixed in substitution of the license plate holders that are conventionally fixed to the vehicles, which makes the mounting of the signaling means easy and quick.

To facilitate the understanding of the message transmitted, the signaling means may comprise at least one warning indication that should be easy to read and may comprise, for instance, the words "avanti" and / or "please".

In the present description, the word "indication" denotes a writing or a symbol or a representation.

In the present description, the word "indication" is to be intended as a warning indication or an advertisement.

Furthermore, the writing may comprise the word "pedoni" and, alternatively, the word "aiuto" in case the license plate holder has to be fixed to the front part of the vehicle so as to efficiently communicate, for instance to the pedestrians, that said message is communicating a help to them.

Otherwise, the indication may comprise also the word "alt" in case the license plate holder has to be fixed to the rear part of the vehicle so as to efficiently communicate, for instance to the following vehicles, that these vehicles must stop for the presence of pedestrians.

Besides, similar words having a similar meaning, possibly also in other languages, may be used to facilitate the written communication according to the country or eventuality or the context.

The signaling system according to the invention may also provide that the signaling means comprise lighting means capable to make said signaling means easily visible.

Advantageously, the signaling means may comprise one or more LEDs. For example, the LED may be green. It is preferable to use a light source with high intensity and low consumption and with a color that has not already been used in the sector of the vehicles, such as the green LED, to communicate a new message with a visual channel and a color that are innovating and appropriate.

Besides, the control means may command the lighting intermittently with predetermined frequency and / or behavior. In this way, it is possible to obtain a signaling that is more visible for the human eye since it is intermittent, for instance by using a higher intermittency frequency than the frequency of the direction indicators.

Advantageously, the control means may be connected to an ignition device of the vehicle. Said control means may comprise a clock so that when the control means detect from the ignition device of the vehicle that the vehicle has been turned off, the control means may command the signaling means to display the off time of the vehicle so as to operate like a time disk.

Through this particular configuration it is possible to obtain an important substitute to the conventional time disks which are put inside the passenger compartments and in which the indication of the hour of the turning off of the vehicle is done manually. Thus, it is possible to avoid errors in signaling the arrival time as well as attempts to signal hours different from the correct hour.

Moreover, the control means may be connected to a detecting device that detects the opening of a door of the vehicle. In this way, when the control means detect from the detecting device that a door has been opened, the control means command the signaling means to turn on. These signaling means allow to signal the intention of a vehicle occupant to get out.

Through said signaling it is possible to increase the safety of a vehicle occupant who wants to get out of the vehicle. In fact, his/her intention to get out is signaled to the subsequent vehicles and / or to the arriving vehicles whose drivers are thus warned.

Besides, the license plate holder according to the invention may comprise a light illuminating the license plate T so as to allow an optimal viewing.

Advantageously, the license plate holder may comprise a camera which captures images in order to film what happens on the road, which is useful for instance in case of road accidents.

Advantageously, the control means may comprise a removable memory interface so that it is possible to modify the operation of the signaling system and / or to record useful data.

Through the presence of the removable memory interface it is possible for instance to control the display of additional writings and/or to record data from the vehicle and the signaling system.

Furthermore, obstacle sensors may be comprised to detect and signal the presence of obstacles in the vicinity of the license plate holder.

Thus, a so-conformed license plate holder according to the invention comprises a series of devices which are particularly useful and allow to equip the vehicle with advantageous systems without having to undertake specific work on the vehicle itself such as drilling or welding.

The aims of the invention are also obtained through a vehicle comprising a license plate holder as previously defined.

Advantageously, the vehicle may comprise detecting means, for instance a speedometer, to detect the speed of the vehicle, and the control means are connected to the detecting means detecting the speed of the vehicle so as to activate or deactivate the signaling means depending on the speed of the vehicle.

In this way, it is possible to avoid that the signaling means come into operation when a vehicle travelling at a high speed, for instance in a highway, is braking.

Advantageously, the vehicle may be provided with courtesy lights in at least one door of the vehicle, and the control means may activate or deactivate the courtesy lights in said door.

In this way, it is possible to utilize even the courtesy lights that are already provided on the vehicle doors so as to have a greater availability of light elements. Preferably, it is possible to control also an intermittent operation of said courtesy lights.

Furthermore, the vehicle according to the invention may comprise rear stop lights and the control means for controlling the signaling means may be connected to the rear stop lights so that when the signaling means are activated as a result of braking by the driver, the control means keep the rear stop lights on until the driver decides to start so that the rear stop lights are off when the vehicle is accelerated.

In this way, it is avoided that a vehicle driver travelling behind the vehicle provided with the signaling means be tempted to overtake on risking to invest any pedestrian who is crossing the road as a result of the activation of the signaling means.

Further features and details of the invention will be better understood from the following description supplied as a non-limiting example as well as from the accompanying drawings wherein:
Figure 1 is a schematic front view of an element of a signaling system according to the invention;
Figure 2 is a front view of a vehicle comprising an element of a signaling system according to Figure 1;
Figure 3 is a top view of the vehicle in Figure 2;
Figures 4 and 5 show elements of a signaling system according to a variant of the invention;
Figure 6 is a top view of a vehicle comprising the elements of a signaling system according to Figures 4 and 5, in a schematic context of a road environment.

With reference to the accompanying figures, number 10 denotes a license plate holder to be mounted on a vehicle 20 and comprising a support 12 consisting of an upper part 14 and a lower part 16.

The upper part 14 of the license plate holder 10 is to receive a license plate T of typology known and having shape and dimensions in compliance with road traffic regulations.

The lower part 16 of the license plate holder 10 comprises signaling means 18 of luminous type.

More particularly, the signaling means 18 comprise an indication, for instance the writing "AVANTI PLEASE", defined through lighting means that can be turned on with a command from suitable control means.

A camera 17 is placed between the license plate T and the signaling means 18 to capture images and film or photograph what happens in the front of the license plate holder. The camera 17 is connected to control means that activate or deactivate the camera itself, for instance on command of the driver of the vehicle 20 or other command, and store the recorded images.

In fact, the control means may comprise a memory card in which it is possible to store what has been captured by the video camera.

Advantageously, it is possible to connect a removable memory device such as a USB stick so that it is possible to extract and consult it remotely from the vehicle. The communication between the video camera and the removable storage device may be wireless to facilitate the extraction and / or the consultation in case of emergency.

A light 19 is disposed adjacent to the video camera 17 and is to illuminate the license plate T in order to allow an optimal vision of it.

Besides, the license plate holder 10 comprises sensors 15 to detect and signal the presence of obstacles close to the license plate holder 10 and to the vehicle 20 on which the license plate holder 10 is mounted. For instance, the sensors 15 may be ultrasonic sensors that can detect when another vehicle is approaching dangerously to the vehicle 20 and control the turning on of the signaling means 18 in order to increase the visibility of the vehicle 20 itself, for instance when the other vehicle is approaching at a speed exceeding a predetermined speed.

The license plate holder may also comprise a GPS sensor to detect the exact position of the vehicle on which said license plate holder is mounted. At the same time, the license plate holder can receive also a device such as a SIM card to exchange information with third parties.

Through all these devices, the license plate holder can exchange information such as videos, photographs, position indications, with other devices.

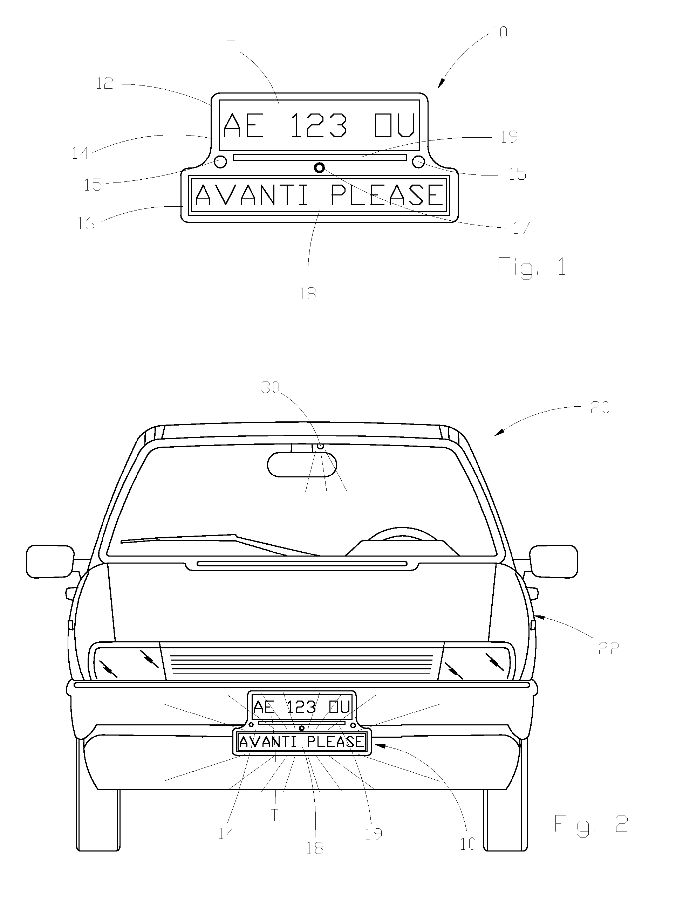

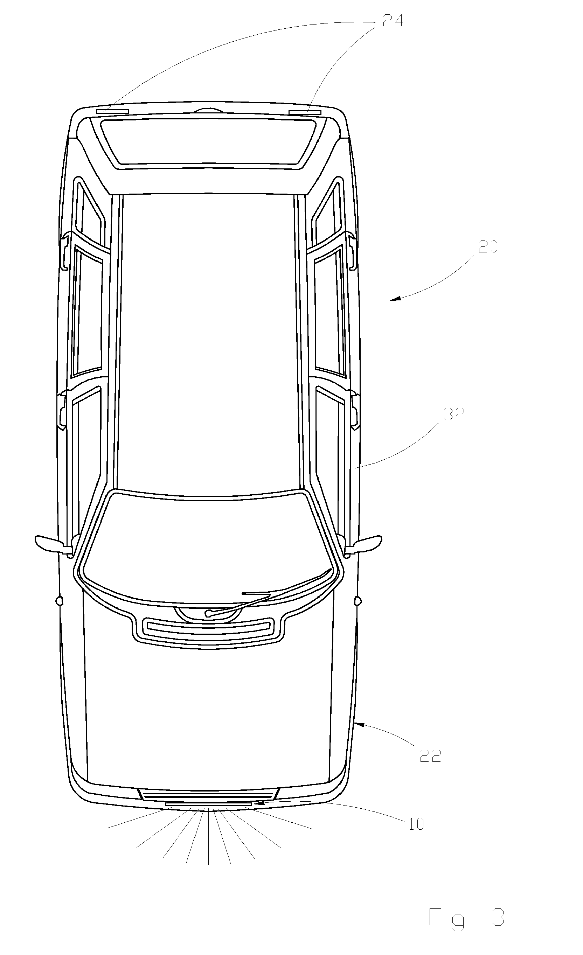

As it appears from Figures 2 and 3, the vehicle 20 comprises a front portion 22 on which the license plate holder 10 is mounted.

The vehicle 20 comprises rear stop lights 24 which, according to known technique, are activated when the vehicle driver presses the brake pedal to actuate the braking system of the vehicle.

The control means of the license plate holder are connected to the braking system of the vehicle.

Accordingly, the license plate holder 10 has the function not only to receive the license plate T of the vehicle, but also to include the signaling means 18 which, in this example, consist of the indication "AVANTI PLEASE".

Said indication is visible to an individual who is in front of the vehicle 20, for instance when the vehicle 20 is decelerating during a braking.

Thus, said indication is immediately comprehensible, for instance in case the individual is a pedestrian who is about to cross the road on which the vehicle 20 is proceeding.

Obviously, the signaling means 18 may comprise any other indication or sign communicating to whom is in front of the vehicle 20 the intention of the driver to stop or any other intention of the driver.

During the normal motion of the vehicle 20, the signaling means 18 are deactivated so that the indication is not visible. When the driver of the vehicle 20 brakes, the control means connected to the braking system of the vehicle activate the signaling means 18 so as to make the indication visible and readable.

In order to make the comprehension of the signaling means 18 even more immediate, the signaling means 18 may comprise lights, for instance green lights. Advantageously, the control means may make the signaling means 18 operate intermittently so as to improve the visibility. It has been shown that the intermittent operation stimulates more human attention. In particular, since the intermittent green light is not present in known vehicles, it represents a new color and stimulation and its visibility is greatly increased.

The control means are connected to the speedometer of the vehicle so that the control means can activate the signaling means 18 only when the vehicle travels at a speed higher than a minimum value and /or lower than a maximum value.

In this way, it is possible to allow, for instance, the activation of the signaling means only when the vehicle travels at a speed lower than a predetermined speed and sufficiently low to allow stopping the vehicle before the crossing point of the pedestrian.

Besides, the control means comprise a command disposed inside the vehicle and actuated by the driver so as to activate or deactivate the signaling means 18 according to the intention of the driver.

In addition, a warning light is placed inside the vehicle 20 and is to indicate that the signaling means are active or not.

Furthermore, when the driver brakes the vehicle 20 and consequently rear stop lights 24 are lit, the control means keep the stop lights lit as long as the driver decides to increase the speed by pressing the accelerator. In this way, it is avoided that a vehicle driver travelling behind the vehicle 20 is tempted to overtake the vehicle 20 on risking to run over the pedestrian who is crossing the road following the activation of an indication such as "AVANTI PLEASE".

The license plate holder 10 of the signaling system according to the invention has the advantage of being easily mountable on a vehicle A in replacement of the conventional license plate holders.

At the same time, the license plate holder 10 according to the invention makes evident the intention of braking of the vehicle driver through the signaling means 18 to those who are outside of the vehicle, in particular the individuals who are in front of the vehicle in question.

Besides, the license plate holder according to the invention allows photographing or videotaping of what happens in front of the vehicle allowing an acquisition of images which could be useful, for instance in case of road accidents or other emergency situations.

In fact, the presence of electronic devices such as GPS and SIM card in the license place holder according to the invention allows to send important information, for instance to an insurance company or other entities.

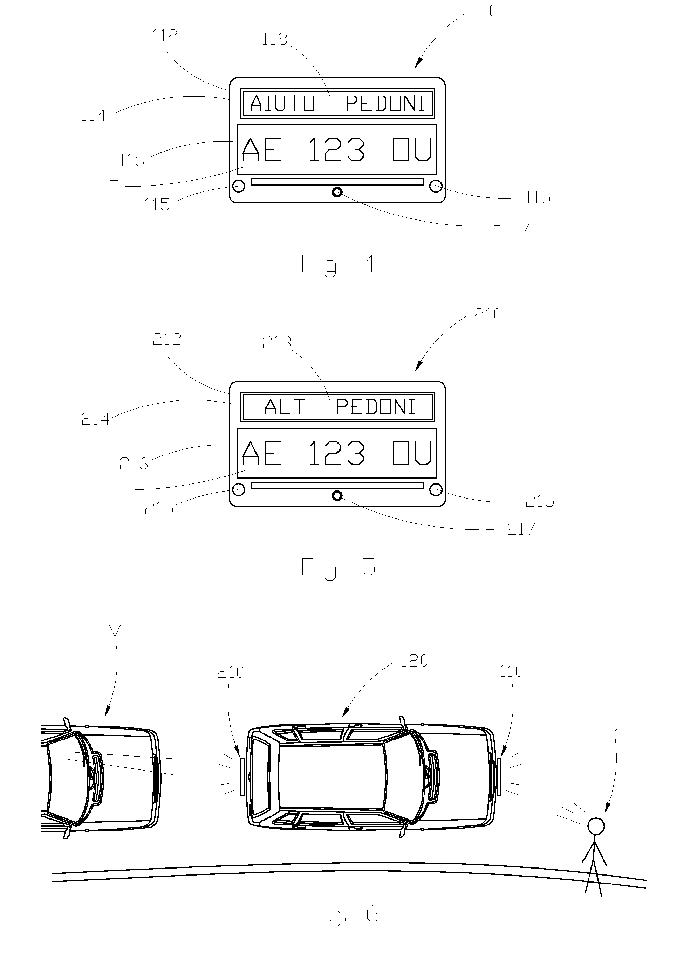

According to a variant of the invention, as visible in Figures 4 to 6, a second license plate holder 110 may be configured to be positioned on the front of a vehicle 120, while a third license plate holder 210 may be configured to be positioned on the rear of the vehicle 120 in order to improve the communication between the vehicle 120 and people or objects surrounding the vehicle, such as pedestrians or other vehicles V following the vehicle 120.

The second license plate holder 110 comprises a support 112 consisting of an upper part 114 and a lower part 116 and comprises other elements which are similar to the elements described above but denoted by reference numbers increased of a hundred.

The upper part 114 comprises signaling means 118 of luminous type while the lower part 116 is provided with a license plate T of known typology and having shape and dimensions in compliance with the road traffic regulations.

More particularly, the signaling means 118 comprise an indication, for instance the writing "AIUTO PEDONI", defined through lighting means which can be turned on by suitable control means, similar to what described above.

The third license plate holder 210 comprises elements similar to those described for the second license plate holder 110 but with reference numbers increased by one hundred, with the exception of the signaling means 218 which comprise an indication, for instance, "ALT PEDONI", so as to communicate a more specific message to vehicles V following the vehicle 120 so that also the vehicles V receive a warning to stop and allow an easy passage for the pedestrians.

Obviously, the signaling system and the license plate holders according to the invention may comprise writings that are analogous or similar to writings as previously described, depending on the country of the world where these indications are used and / or depending on the prevailing language. For instance, it is possible to use also the writings "HELP WALK" and / or "ALT WALK" to facilitate the interpretation to people who are aware of Anglo-Saxon languages.

Obviously, since the signaling system and the license plate holders according to the invention operate by utilizing a colored light, more preferably a colored light which is not red or yellow, for instance an intermittent green light, the signaling system and the license plate holders transmit their message to facilitate the crossing of pedestrians even in the case the pedestrians do not know the language used in the writing. In fact, an intermittent green light is not used in any type of signaling and may be interpreted univocally as a message allowing the crossing of pedestrians or at least signalizing that it is necessary to pay more attention to a particular emergency moment.

When braking, the second license plate holder 110 and the third license plate holder 210 are lighted with said light so as to become more visible. According to another variant of the invention, the control means controlling the license plate holders according to the invention may cooperate with a courtesy light 30 or with a door 32 of the vehicle 20 so as to control the turning on of the signaling means when a door of the vehicle is opened or when a courtesy light 30 is turned on inside the vehicle 20. Thus, it is possible advantageously to signalize on one or more license plate holders for instance that an occupant of the vehicle 20 has opened a door 32 to get out of the vehicle, the safety being thus improved.

Through a combined action of the second license plate holder 110 and the third license plate holder 210 it is possible to obtain a synergic, simple, effective, communicative effect and allow a better communication between the vehicle driver and the pedestrians or the vehicles coming in the opposite direction whose drivers look at the front part of the vehicle in question, on guaranteeing also a clear communication with the following vehicles so that also these vehicles stop without performing maneuvers that can be dangerous for the vehicle itself or the pedestrians.

According to another variant of the invention, a license plate holder may comprise signaling means that display an indication in time format so that these signaling means may be used to signalize the time when the vehicle on which the license plate holder is mounted was turned off. For instance, the license plate holder may be connected to the ignition device of the vehicle and may comprise an inner clock or may be connected to the vehicle clock, if any, in order to display, permanently or flashing, the time detected by the inner clock when the ignition device has been deactivated or when the vehicle has been turned off. Thus, the license plate holder may be used like a time disk.

According to another variant of the invention, a license plate holder according to the invention may comprise signaling means comprising a plurality of LED lights which can be turned on or off individually by the control means so as to realize different writings and / or figures from the writings described previously.

For instance, the control means may be connected to a storage device, for instance a USB stick to obtain power schemes for the signaling means that can display advertising and / or advertising messages.

According to a further variant of the invention, the control means may control even the turning on of the courtesy lights present on the vehicle doors to intermittently signalize to those around.

Besides, a signaling device having a similar structure to a license plate holder according to the invention may be connected to a vehicle door and comprises signaling means which in turn comprise LEDs, for instance green LEDs, so that they may be turned on by the control means and act as an additional signalization further improving safety.

Finally, further variants may be provided, for instance the utilization of different signaling systems to signalize the message "AVANTI PLEASE" and / or "ALT PEDONI" and / or "AIUTO PEDONI", for instance sound signaling systems. These variants are to be considered as included in the scope of protection of the invention.

## Claims

1. Signaling system suitable for being mounted on a vehicle (20; 120) comprising a braking system (24), a front part and a rear part, comprising a license plate holder (10; 110, 210) that acts as a support for the license plate (T) of the vehicle (20; 120) and signals the intentions of the driver of the vehicle (20; 120) to an individual (P) who is in the vicinity of the vehicle (20; 120),
**characterized by** comprising signaling means (18; 118, 218) and control means connected to the braking system of the vehicle (20; 120), said control means being adapted to activate the signaling means (18; 118, 218) when the braking system of the vehicle (20; 120) is actuated so that said signaling means (18; 118, 218) communicate a message to the individual (P).

2. Signaling system according to claim 1, wherein said signaling means (18; 118, 218) comprise at least one indication.

3. Signaling system according to claim 2, wherein said indication is a writing comprising the words "avanti" and /or "please".

4. Signaling system according to one of the preceding claims, wherein the writing comprises the word "pedoni" and, alternatively, the word "aiuto" in case the license plate holder (10; 110) has to be fixed to the front part of the vehicle, or the word "alt" in case the license plate holder (210) has to be fixed to the rear part of the vehicle, or similar words having a similar meaning in other languages.

5. Signaling system according to one of the preceding claims, wherein the signaling means (18; 118, 218) comprise at least one green LED.

6. Signaling system according to one of the preceding claims, wherein the control means command the lighting intermittently with a predetermined frequency and/or behavior.

7. Signaling system according to one of the preceding claims, wherein a camera (17) is comprised to capture images.

8. Signaling system according to one of the preceding claims, wherein the control means comprise a removable memory interface so that it is possible to modify the operation of the signaling system and / or record useful data.

9. Signaling system according to one of the preceding claims, wherein obstacle sensors (15) are comprised to detect and signal the presence of obstacles in the vicinity of the license plate holder (10; 110, 210), and/or wherein a position sensor is comprised and / or an electronic device is comprised to send information to a third party.

10. Signaling system according to one of the preceding claims, wherein the control means are connected to an ignition device of the vehicle (20; 120) and wherein the control means comprise a clock so that when the control means detect from the ignition device of the vehicle (20; 120) that the vehicle (20; 120) has been turned off, the control means command the signaling means (18; 118, 218) to display the off time of the vehicle (20; 120) so as to operate as a time disc.

11. Signaling system according to one of the preceding claims, wherein the control means are connected to a detecting device that detects the opening of a door (32) of the vehicle (20; 120) so that when the control means detect from the detecting device that a door (32) has been opened, the control means command the signaling means (18; 118, 218) to turn on so as to signal the intention of an occupant of the vehicle (20; 120) to get out.

12. Vehicle (20; 120) comprising a signaling system according to one of the preceding claims.

13. Vehicle (20; 120) according to the preceding claim, wherein detecting means are comprised to detect the speed of the vehicle (20; 120) and the control means are connected to the detecting means for detecting the speed of the vehicle so as to activate or deactivate the signaling means (18) depending on the speed of the vehicle (20; 120).

14. Vehicle (20; 120) according to claim 12 or 13, wherein the vehicle (20; 120) is provided with courtesy lights in at least one door of the vehicle (20; 120) and the control means activate or deactivate the courtesy lights in said door.

15. Vehicle (20; 120) according to one of claims 12 to 14, wherein rear stop lights (24) are comprised and wherein the control means for controlling the signaling means (18; 118, 218) are connected to the rear stop lights (24) so that when the signaling means (18; 118, 218) are activated as a result of braking by the driver, the control means keep the rear stop lights (24) on until the driver decides to start so that the rear stop lights (24) are off when the vehicle (10) is accelerated.
